# EUROPEAN PATENT APPLICATION

(11) **EP 1 338 828 A2**
(43) Date of publication of application: **27.08.2003**
(21) Application number: 03251127.1
(22) Date of filing: 25.02.2003
(51) Int. Cl.: F16H 7/18

(54) **Chain tensioner arm and chain guide and a method and mold for manufacturing the same**

(30) Priority: 26.02.2002 JP 2002049841
(71) Applicant: BorgWarner Morse TEC Japan K.K., Nabari, Mie 518-0495 (JP)
(72) Inventor: Yoshitake, Akiyama, Nabari, Mie 518-0495 (JP)
(74) Representative: Lerwill, John

(57) **Abstract**

A chain contacting element (10) comprising a body (11) and a shoe (12). The body of the chain contacting element (21) is formed of a first resin plastic, having a shoe (22) fitting face (21a) of a cup shaped cross section with upraised wall portions (210) on opposite side edges thereof. The shoe, formed of a second resin plastic, has a back face whose shape is complementary to the shoe fitting face of the body. The shoe also has a chain sliding face (22b) of the same shape as the shoe fitting face. The body and shoe are joined to each other by melting together the first resin plastic on the shoe fitting face and the second resin plastic on the back face.

## Description

### FIELD OF THE INVENTION

The invention pertains to the field of chain tensioners. More particularly, the invention pertains to a method of forming chain contacting elements.

### DESCRIPTION OF RELATED ART

In timing systems used for driving valve gears of an internal combustion engine, a chain tensioner arm along with a tensioner is provided on the slack side of a timing chain and a chain guide is provided on the tight side of the timing chain.

Prior art tensioner arm and chain guide of Japanese Patent Publication No. 2000-97300 is formed of an aluminum, die-cast body portion and a plastic shoe with a chain sliding face. The plastic shoe has a plurality of engaging claws. The body portion has a plurality of recesses adapted to be engaged with the engaging claws of the plastic shoe. The shoe is fitted to the body portion with the engaging claws of the shoe engaged with the corresponding recesses of the body portion. A clearance is formed between the shoe fitting face of the body portion and the back side surface of the shoe causing the shoe to oscillate or chatter on the shoe fitting face of the body portion as the chain travels along the chain sliding face of the shoe.

In order to prevent oscillation or chatter on the shoe fitting face of the body portion, other prior art, such as Japanese Patent Publication No.2000-337462 uses an insert molding process where the shoe is molded with a preformed body portion as an insert. In this case, fixing the shoe to the body portion without forming any clearance which causes chattering of the shoe is possible. However, the forming process of the body portion has to be performed separately from the forming process of the shoe, thereby making the entire forming processes rather complicated. Also, at the time of the insert molding process, when heated melted resin for the shoe molding comes into contact with the body portion as an insert, a surface of the preformed body portion that has been formed by a separate process has already cooled. As a result, resin on the body portion side will not be melted between the shoe and the body portion. Thus, a strong joining surface cannot be achieved between the shoe and the body portion. Therefore, as described in the publication, a joint such as a dovetail joint needs to be provided at a joint surface of the shoe and the body portion, which makes the shape of the joint surface and thus, the structure of the die sets rather complicated.

### SUMMARY OF THE INVENTION

A chain tensioner arm or chain guide for a power transmission chain according to a first embodiment comprising a body portion that has a shoe fitting face of a cup-shaped cross section with upraised wall portions on opposite side edges thereof formed of a first resin plastic, and a shoe that has a back surface whose shape is complementary to the shoe fitting face of the body portion that has a chain sliding face of the same shape as the shoe fitting face and is formed of a second resin plastic. The first and second resin plastics are melted and joined to each other at a joint surface between the body portion and the shoe.

Since the first resin plastic forming the body portion and the second resin plastic forming the shoe are melted to join the joint surfaces of the body portion and the shoe, the shoe can be firmly fixed to the body portion via a joint surface of simple shape without forming a joint such as dovetail joint. Moreover, the shoe is joined to the body portion with the back surface of the shoe sandwiched between the both upraised wall portions on opposite sides of the body portion. Thereby, the shoe is difficult to flake off from the body portion due to the increase of contact area of the joint surface as compared to the case where a shoe is joined to the body portion via a simple flat surface. As a result, the shoe can be secured to the body portion more firmly.

The first and second resin plastics preferably have a substantially equal melting point in order to join each of the resin plastics together in a melting state to increase bondability of each the resin plastics. The first and second resin plastics may be the same plastic in order to facilitate and simplify the structure of the chain tensioner arm and chain guide. The first resin plastic may have glass fibers fitted therein as additives in order to increase the strength of the body portion.

The second embodiment is a method for manufacturing a chain tensioner arm or chain guide. In this method, the first melting resin plastic is injected into a first cavity in an injection molding die set to form the body portion. Immediately after completion of injection the slide die is moved and a second cavity is formed in the injection molding die set. Immediately after the first melting resin plastic is injected into the injection molding die set, the second melting resin plastic is injected. Thereby, each resin plastic can be joined at the joined surfaces of the first and second resin plastics in their melting condition and the shoe can thus be securely fixed to the body portion. Moreover, a partition member does not need to be provided discretely from the injection molding die set to divide the cavity of the injection molding die set. At the time of injection molding, the slide die has only to move. As a result, a chain tensioner arm or chain guide may be formed with ease.

The third embodiment is a mold or forming die for manufacturing a chain tensioner arm or a chain guide. This mold includes a body-portion-forming die with a cavity to form the body portion of a chain tensioner arm or chain guide and a slide die movable toward and away from the cavity of the body-portion-forming die. The slide die is adapted to take a body-portion-forming position to define the cavity to form the body portion and a shoe-forming position to define a cavity to form the shoe.

The slide die is placed at the body-portion-forming position at the time of forming the body portion and the slide die is placed at the shoe-forming position at the time of forming the shoe. Thereby, the body portion and the shoe may be joined at the joined surfaces in their melting condition. The shoe can thus be fixedly and securely attached to the body portion. Since a partition member does not need to be provided discretely from the injection molding die set to divide the cavity of the injection molding die set, the structure of the forming die can be simplified.

### BRIEF DESCRIPTION OF THE DRAWING

Fig. 1 shows a schematic view of an engine timing system incorporating a chain tensioner arm and a chain guide according to an embodiment of the present invention.
Fig. 2 shows a cross sectional view of Figure 1 taken along line II-II showing a cross section of the chain guide.
Fig. 3 shows a schematic view showing the method of forming a chain guide.
Fig. 4 shows a schematic view showing the method of forming a chain guide.
Fig. 5 shows a schematic view showing the method of forming a chain guide.
Fig. 6 shows a schematic view showing the method of forming a chain guide.

### DETAILED DESCRIPTION OF THE INVENTION

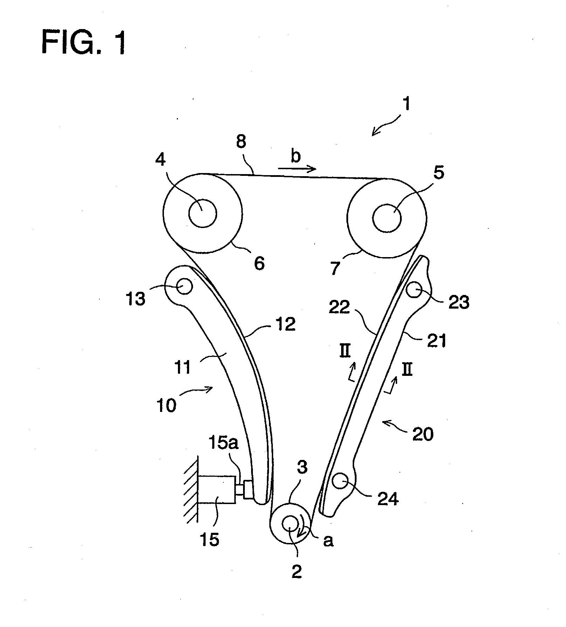

As shown in Figure 1, an engine timing system 1 is comprised of a crankshaft 2 and a camshafts 4, 5 mounted on crank sprocket 3 and cam sprockets 6, 7 respectively. A silent chain 8 wrapped around sprockets 3, 6 and 7. The arrow marked a in the drawing shows the rotational direction of the crankshaft 2 and the arrow marked b shows the running direction of the silent chain 8.

Tensioner arm 10 is provided on the slack side of the silent chain 8. The tensioner arm 10 includes an arm body 11 and a shoe 12 that is attached to the arm body 11 and that the chain 8 slides along. The arm body 11 is swingable around a supporting shaft 13 inserted through a proximal end portion of the arm body 11. The distal end portion of the arm body 11 is contacted by a piston 15a of a hydraulic tensioner 15.

Opposite the tensioner arm, provided on the tight side of the silent chain 8 is a chain guide 20. The chain guide 20 includes a guide body 21 and a shoe 22 that is attached to the guide body 21 that the chain 8 slides along. The guide body 21 is fixedly attached to an engine component via supporting shafts 23, 24 inserted through the opposite ends of the guide body 21.

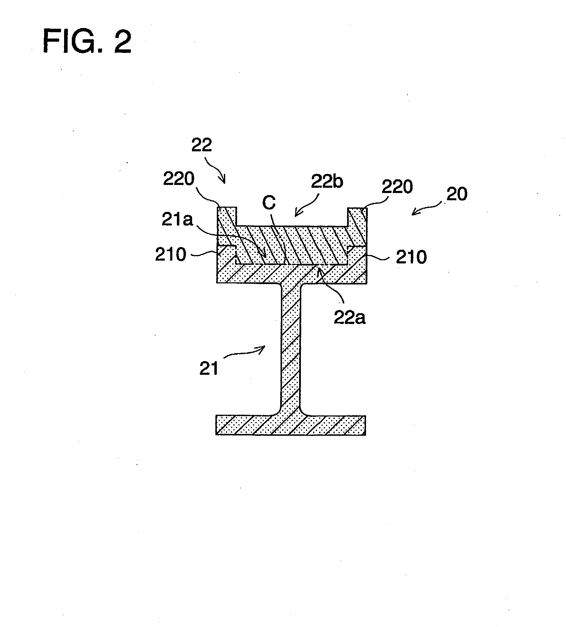

As shown in Figure 2, the guide body 21 of the chain guide 20 has a generally I-shaped cross section. A shoe fitting surface 21a of the guide body 21 has a cup-shaped cross section with upraised wall portions 210 formed on opposite side edges thereof.

A back surface 22a of the shoe 22 has a complementary shape to the shoe fitting surface 21a of the guide body 21. Resin plastics forming the guide body 21 and the shoe 22 are melted and joined to each other at the joint surface C of the guide body 21 and the shoe 22. Opposite the back surface 22a of the shoe 22 a chain sliding surface 22b is formed that the chain 8 slides on. The chain sliding surface 22b has the same shape as the shoe fitting surface 21 a of the guide body 21, which is a cup-shaped cross section with upraised wall portions 220 formed on opposite side edges thereof. The chain sliding surface 22b of the shoe 22 may be formed with a plurality of oil grooved extending along the length of the shoe 22 between both of the upraised wall portions 220. In this case, the injection molding process is performed using a slide die 51 with a plurality of longitudinally extending protrusions formed on the opposing surface 51b.

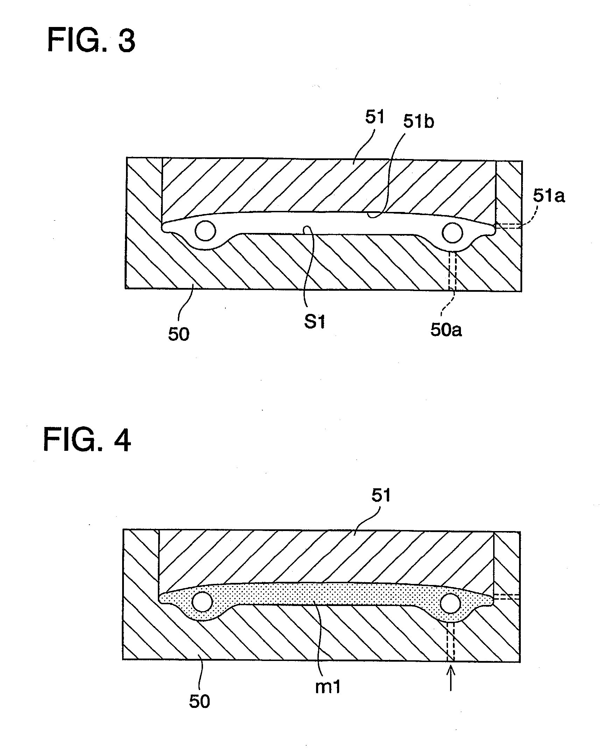

Figures 3 through 6 show a method and a mold used to form chain guide 20. The chain guide 20 is formed by an injection molding process. The mold or forming die is composed of a guide-body forming die 50 having a cavity S1, which forms the guide body 21 and a slide die 51 provided slidably inside the guide-body forming die 50.

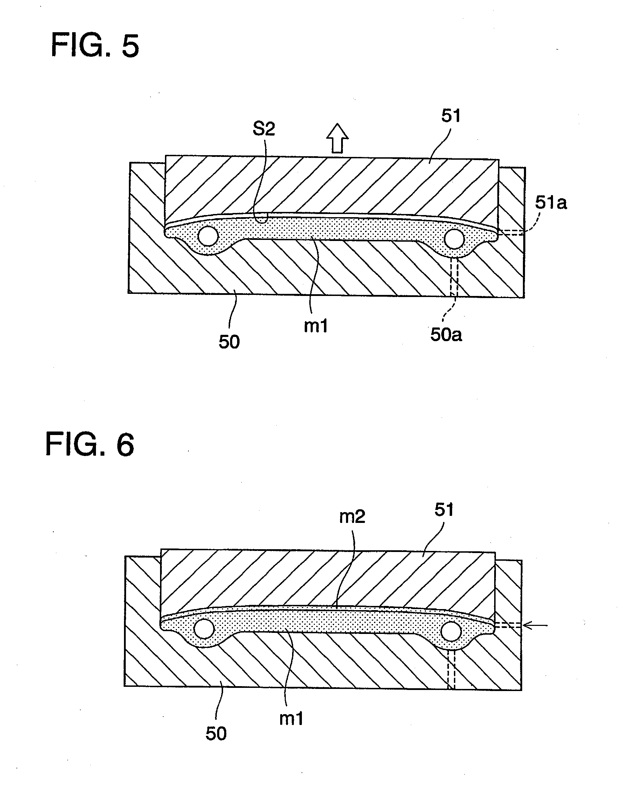

The slide die 51 has an opposing face 51b of a cup-shaped cross section that is oppositely disposed to the cavity S1 of the guide-body forming die 50 which corresponds to the shoe fitting surface 21a of the guide body 21 and the chain sliding surface 22b of the shoe 22. The slide die 51 is movable toward and away from the cavity S1 of the guide-body forming die 50 such that two positions, guide-body forming, as shown in Figures 3 and 4, which defines cavity S1 and shoe-forming position, as shown in Figures 5 and 6, which defines cavity S2. A partition member is not needed to separate the cavity of the injection molding die set since in the present invention the slide die has only to move at the time of injection molding process. The guide-body forming die 50 also has an inlet passage 50a to inject a first resin plastic into cavity S1 and an inlet passage 51a to inject a second resin plastic into cavity S2.

When the chain guide 20 is injection molded using the die sets, as shown in Figure 3, the slide die 51 is positioned at the guide-body forming position. At this time, the cavity S1 is defined by the guide-body forming die 50 and the slide die 51. The distal end of inlet passage 50a opens into the cavity S1, while the distal end of inlet passage 51a is closed by the side wall surface of the slide die 51.

From this condition, as shown in Figure 4, a first melting resin plastic m1 is injected into cavity S1 through the inlet passage 50a. Immediately after completion of injection of the first resin plastic m1, as shown in Figure 5, the slide die 51 is moved in the direction away from the guide-body forming die 50. By this movement of the slide die 51, the cavity S2 is formed between the first resin plastic m1 and the slide die 51. At this time, the distal end of the inlet passage 51a opens into the cavity S2. Then, a second melting resin plastic m2 is injected into the cavity S2 through the inlet passage 51a as shown in Figure 6. At the time of injection of the second resin plastic m2, the first resin plastic m1 has not cooled or cured, and the first and second resin plastics m1 and m2 are melted and joined to each other at the joined surface C. As a result, the shoe 22 can be fixedly and firmly attached to the guide body 21 via the joined surface of a simple configuration without forming a joint such as a dovetail joint at a joined surface between the guide body 21 and the shoe 22, as in the prior art. In this case, the shoe 22 is joined to the guide body 21 with the back surface 22a of the shoe 22 sandwiched between upraised wall portions 210 of the guide body 21. The shoe 22 is difficult to flake off from the guide body 21 due to the increase of contact area of the joined surfaces as compared to the prior art where the shoe is joined to the guide body via a simple flat surface.

Preferably, the coefficient of thermal expansion of the first resin plastic m1 is essentially equal to that of the second resin plastic m2 in order to prevent the occurrence of hair cracks or cracks in either of the resin plastics due to the difference of thermal contraction of the resin plastics m1, m2 at the time of cure or due to the rapid increase or decrease of the ambient temperature during operation. More preferably, the first and second resin plastics m1, m2 are the same material. Resin plastics such as 6/6 nylon may be used for the first and second resin plastics m1, m2. The first resin plastic m1 has preferably glass fibers filled therein to strengthen the guide body 21. In this case, the forming process becomes simpler and the structure of the chain guide may be further simplified.

The method of making a chain contacting element, which is disclosed, is not limited to a chain guide. It is within the scope of the invention to make other chain contacting elements such as a tensioner arm.

Accordingly, it is to be understood that the embodiments of the invention herein described are merely illustrative of the application of the principles of the invention. Reference herein to details of the illustrated embodiments is not intended to limit the scope of the claims, which themselves recite those features regarded as essential to the invention.

## Claims

1. A chain contacting element for an internal combustion engine, comprising:
a body formed of a first resin plastic, having a shoe fitting face of a cup-shaped cross section that has upraised wall portions on opposite side edges thereof;
a shoe formed of a second resin plastic having a back face whose shape is complementary to the shoe fitting face of the body portion and that has a chain sliding face of the same shape as the shoe fitting face; and
wherein the body and the shoe are joined to each other by melting together the first resin plastic on the shoe fitting face and the second resin plastic on the back face of the shoe.

2. The chain contacting element of claim 1, wherein the first resin plastic and the second resin plastic have melting points that are substantially equal.

3. The chain contacting element of claim 2, wherein the first resin plastic and the second resin plastic are the same plastic.

4. The chain contacting element of claim 1, 2 or 3, wherein the first resin plastic contains glass fibers therein as additives.

5. A method for manufacturing a chain contacting element having a body and a shoe, the method comprising the steps of:
injecting a first resin plastic into a first cavity in an injection molding die set to form the body;
immediately after completion of injection of the first resin plastic, moving a slide die to form a second cavity in the injection molding die set; and
before the first resin plastic cools or cures, injecting a second resin plastic into the second cavity to form the shoe.

6. The method of manufacturing a chain contacting element of claim 5, wherein the first resin plastic and the second resin plastic have melting points that are substantially equal.

7. The method of manufacturing a chain contacting element of claim 6, wherein the first resin plastic and the second resin plastic are the same plastic.

8. The method of manufacturing a chain contacting element of claim 5, 6 or 7, wherein the first resin plastic contains glass fibers therein as additives.

9. A mold for forming a chain contacting element having a body and a shoe fitted thereon, the mold comprising:
a body forming die having a first cavity to form the body of the chain tensioner arm or the chain guide; and
a slide die provided movably toward and away from the first cavity of the body forming die, the slide die being adapted to take a body forming position to define the first cavity and a shoe-forming position to define a second cavity to form the shoe of the chain tensioner arm or the chain guide.
